# EUROPEAN PATENT APPLICATION

(11) **EP 4 496 032 A1**
(43) Date of publication of application: **22.01.2025**
(21) Application number: 24179983.2
(22) Date of filing: 04.06.2024
(51) Int. Cl.: H01M 4/525, H01M 4/62, H01M 10/052, H01M 10/0587, H01M 10/42, H01M 10/653, H01M 10/654

(54) **ELECTRODE FOR RECHARGEABLE LITHIUM BATTERY, ELECTRODE ASSEMBLY, AND RECHARGEABLE LITHIUM BATTERY INCLUDING THE SAME**

(30) Priority: 17.07.2023 KR 20230092632
(71) Applicant: Samsung SDI Co., Ltd., Yongin-si, Gyeonggi-do 17084 (KR)
(72) Inventor: HA, Jaehwan, 17084 Yongin-si, Gyeonggi-do (KR); KIM, Duckhyun, 17084 Yongin-si, Gyeonggi-do (KR); LEE, Dong Myung, 17084 Yongin-si, Gyeonggi-do (KR); YOO, Heeeun, 17084 Yongin-si, Gyeonggi-do (KR)
(74) Representative: Michalski Hüttermann & Partner Patentanwälte mbB

(57) **Abstract**

Disclosed are an electrode for a rechargeable lithium battery, an electrode assembly including the same, and a rechargeable lithium battery, the electrode including an uncoated portion; an active material layer; and an endothermic ceramic layer which are provided sequentially from one end to the other end on the same single surface of the current collector.

## Description

### BACKGROUND

### 1. Field

Electrodes for a rechargeable **lithium** battery, electrode assemblies including the same, and a rechargeable lithium battery are disclosed.

### 2. Description of the Related Art

Recently, with the rapid spread of electronic devices that use batteries, such as mobile phones, laptop computers, and electric vehicles, the desire for rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte, and electrical energy is produced through oxidation and reduction reactions if lithium ions are intercalated/deintercalated from the positive electrode and negative electrode.

However, it is very difficult to ensure safety and reliability while minimizing or reducing the decrease in energy density while driving a rechargeable lithium battery having high energy density.

### SUMMARY

Some embodiments of the present disclosure provide an electrode for a rechargeable lithium battery that can ensure safety and reliability while minimizing or reducing a decrease in energy density while driving a rechargeable lithium battery having high energy density.

Some embodiments provide an electrode assembly for a rechargeable lithium battery including the electrode for a rechargeable lithium battery.

Some embodiments provide a rechargeable lithium battery including the electrode assembly.

Some embodiments provide an electrode for a rechargeable lithium battery an electrode for a rechargeable lithium battery in which an uncoated portion; an active material layer; and an endothermic ceramic layer are provided sequentially from one end to the other end on the same single surface of the current collector.

Some embodiments provide an electrode assembly for a rechargeable lithium battery, which is a wound-type electrode assembly including a stack of a negative electrode, a separator, and a positive electrode, wherein at least one electrode of the negative electrode and the positive electrode is the electrode for the rechargeable lithium battery.

Some embodiments provide a rechargeable lithium battery including the electrode assembly and electrolyte.

The electrode for a rechargeable lithium battery according to some embodiments has excellent insulation and heat absorption effects, thereby minimizing or reducing the decrease in energy density during battery operation, lowering the overall amount of heat generated in the event of a short circuit, and ensuring a high level of safety and reliability.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic view showing an electrode of some embodiments.
FIG. 2 is a schematic view showing a rechargeable lithium battery according to some embodiments.

### DETAILED DESCRIPTION

Hereinafter, embodiments of the present disclosure will be described in more detail. However, these embodiments are examples, the present disclosure is not limited thereto and the present disclosure is defined by the scope of the appended claims, and equivalents thereof.

As used herein, if specific definition is not otherwise provided, it will be understood that if an element such as a layer, film, region, or substrate is referred to as being "on" another element, it can be directly on the other element or intervening elements may also be present.

As used herein, if specific definition is not otherwise provided, the singular may also include the plural. In addition, unless otherwise specified, "A or B" may mean "including A, including B, or including A and B."

As used herein, "combination thereof" may mean a mixture of constituents, a stack, a composite, a copolymer, an alloy, a blend, and/or a reaction product.

As used herein, if a definition is not otherwise provided, a particle diameter may be an average particle diameter. This average particle diameter means an average particle diameter (D50), which is a diameter of particles with a cumulative volume of 50 volume% in the particle size distribution. The average particle diameter (D50) can be measured by any suitable methods available in the art, for example, by measuring with a particle size analyzer, a transmission electron microscope and/or scanning electron microscope. In some embodiments, a dynamic light-scattering measurement device may be used to perform a data analysis, and the number of particles is counted for each particle size range. From this, the average particle diameter (D50) value may be easily obtained through a calculation. A laser diffraction method may also be used. If measuring by laser diffraction, for example, the particles to be measured may be dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D50) based on 50% of the particle size distribution in the measuring device can be calculated.

As used herein, "thickness" may be measured, for example, through a photograph taken with an optical microscope such as a scanning electron microscope.

In this specification, "single surface" means one surface of a structure.

In this specification, "end" means the end or edge of a structure.

### Electrode

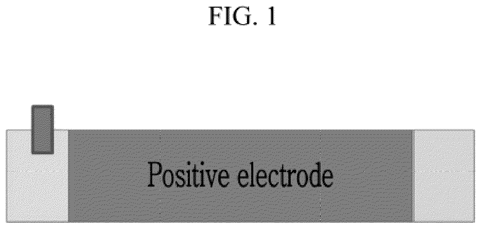

Some embodiments provide an electrode for a rechargeable lithium battery an electrode for a rechargeable lithium battery in which an uncoated portion; an active material layer; and an endothermic ceramic layer are provided sequentially from one end to the other end on the same single surface of the current collector. FIG. 1 is a schematic view showing an electrode of some embodiments.

**1 In the electrode according to some embodiments, the endothermic ceramic layer exhibits insulating properties (e.g., electrically insulating properties) that prevent a current from directly flowing to a current collector.**

In some embodiments, if a short circuit occurs in a rechargeable lithium battery cell including the electrode according to some embodiments, the current flows in the form of the 'endothermic ceramic layer ↔ the current collector,' leading to a reduction in Joule heat.

**2 In the electrode of some embodiments, the endothermic ceramic layer includes an endothermic ceramic and thus directly exhibits endothermic properties as well as the insulation properties (e.g., the electrically insulating properties).**

In the present specification, the "endothermic ceramic" refers to a ceramic concurrently (e.g., simultaneously) having the endothermic properties and the insulation properties (e.g., electrically insulating properties), and the "insulating ceramic" refers to a ceramic having the insulation properties (e.g., electrically insulating properties) alone without the endothermic properties, in which the two terms are distinct.

3 **Comprehensively, the electrode according to some embodiments, compared with an electrode including no endothermic ceramic layer or an insulating ceramic layer (e.g., an electrically insulating ceramic layer) instead of the endothermic ceramic layer, has an effect of securing safety and reliability as well as minimizing or reducing a decrease in energy density of the rechargeable lithium battery.**

Hereinafter, the electrode of some embodiments will be described in more detail.

### Endothermic Ceramic Layer

The endothermic ceramic layer, if measured through XRD by using CuKα rays, exhibits or essentially exhibits a peak at 2θ in a range from about 12° to about 15°, about 25° to about 30°, about 37° to about 40°, about 47° to about 50°, and about 64° to about 66°.

The endothermic ceramic layer exhibiting or essentially exhibiting an XRD peak may include or essentially include pseudoboehmite. The pseudoboehmite corresponds to an endothermic ceramic represented by a chemical formula of Al₂O₃·nH₂O (wherein, n is an integer of 1 to 2).

Based on a total weight of 100 wt% of the endothermic ceramic layer, a content or amount of pseudoboehmite may be greater than or equal to about 50 wt%, greater than or equal to about 60 wt%, greater than or equal to about 70 wt%, or greater than or equal to about 80 wt%; and less than or equal to about 100 wt%. For example, if the endothermic ceramic is made of the pseudoboehmite alone, safety and reliability of a battery may be significantly improved.

In some embodiments, the endothermic ceramic layer, if measured through XRD by using CuKα rays, may additionally exhibit a peak at 2θ in a range from about 35° to about 37°, about 45° to about 47°, and about 66° to about 69°.

The endothermic ceramic layer in which the above additional XRD peaks appear may further include general boehmite. The general boehmite corresponds to an insulating ceramic (e.g., an electrically insulating ceramic) represented by the chemical formula of AlO(OH).

Because the general boehmite does not have endothermic properties, as the content or amount of pseudoboehmite in the endothermic ceramic increases, the safety and reliability of the battery can be improved.

The ceramics constituting the endothermic ceramic layer, regardless of whether they are endothermic ceramics or insulating ceramics (e.g., electrically insulating ceramics), may have a D50 particle size of about 0.1 µm to about 5 µm, about 0.3 µm to about 4 µm, about 0.5 µm to about 3 µm, or about 0.8 µm to about 2 µm. Within the foregoing ranges, excellent endothermic and insulation properties (e.g., electrically insulating properties) can be achieved concurrently (e.g., simultaneously).

The endothermic ceramic layer may include a binder in addition to the endothermic ceramic and the insulating ceramic.

The binder may play a role in adhering the materials in the endothermic ceramic layer to each other and adhering the endothermic ceramic layer to the current collector. The binder may be a water-insoluble binder, a water-soluble binder, or a combination thereof.

The water-insoluble binder may include polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

Examples of the water-soluble binder include a rubber-based binder and/or a polymer resin binder. The rubber-based binder may be selected from a styrene-butadiene rubber (SBR), an acrylated styrene-butadiene rubber, an acrylonitrile-butadiene rubber (ABR), an acrylic rubber, a butyl rubber, a fluorine rubber, and a combination thereof. The polymer resin binder may be selected from polyethyleneoxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

If a water-soluble binder is used as the binder, a cellulose-based compound capable of imparting viscosity may be further included. The cellulose-based compound may include one or more types (or kinds) of carboxylmethyl cellulose, hydroxypropylmethyl cellulose, methyl cellulose, and/or alkali metal salts thereof. The alkali metal may be Na, K, and/or Li.

The binder may be included in an amount of about 1 to about 15 wt%, for example about 4 wt% to about 11 wt%, based on 100 wt% of the total amount of the endothermic ceramic layer. If the content range is satisfied, the effect of the endothermic ceramic layer may be maximized or increased.

### Positive Electrode Tab

Despite the presence of the endothermic ceramic layer, if the positive electrode tab is welded for high output and rapid charging, the current collector at this welded portion is inevitably exposed to the outside and may become a weak point in the event of a short circuit.

While two positive electrode tabs are generally used, in some embodiments, one positive electrode tab is attached on the uncoated portion alone. In this way, by attaching one positive tab on the uncoated portion alone, it is possible to design a battery that secures high output and rapid charging performance while ensuring collision safety.

### Positive Electrode Active Material

If the electrode of some embodiments is a positive electrode, the active material layer may be a positive electrode active material layer.

The positive electrode active material may be a compound (lithiated intercalation compound) capable of intercalating and deintercalating lithium. In some embodiments, one or more types (or kinds) of composite oxides of lithium and a metal selected from cobalt, manganese, nickel, and a combination thereof may be used.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high nickel-based positive electrode active materials can achieve high capacity and can be applied to a high-capacity, high-density rechargeable lithium battery.

For example, the positive electrode active material may include a lithium nickel composite oxide represented by Chemical Formula 1:

Chemical Formula 1 Liₐ₁Niₓ₁M¹_{y1}M²_{1-x1-y1}O₂.

In Chemical Formula 1,
0.9≤a1≤1.8, 0.3≤x1≤1, 0≤y1≤0.7, and
M¹ and M² are each independently selected from Al, B, Ce, Co, Cr, F, Mg, Mn, Mo, Nb, P, S, Si, Sr, Ti, V, W, Zr, and a combination thereof.

In Chemical Formula 1, 0.4≤x1≤1 and 0≤y1≤0.6, or 0.5≤x1≤1 and 0≤y1≤0.5, or 0.6≤x1≤1 and 0≤y1≤0.4, or 0.7≤x1≤1 and 0≤y1≤0.3, or 0.8≤x1≤1 and 0≤y1≤0.2, or 0.9≤x1≤1 and 0≤y1≤0.1.

For example, the positive electrode active material may include a lithium nickel cobalt composite oxide represented by Chemical Formula 2:

Chemical Formula 2 Liₐ₂Niₓ₂Co_{y2}M³_{1-x2-y2}O₂.

In Chemical Formula 2, 0.9≤a2≤1.8, 0.3≤x2<1, 0<y2≤0.7, and M³ is selected from Al, B, Ce, Cr, F, Mg, Mn, Mo, Nb, P, S, Si, Sr, Ti, V, W, Zr, and a combination thereof.

In Chemical Formula 2 0.3≤x2≤0.99 and 0.01≤y2≤0.7, or 0.4≤x2≤0.99 and 0.01≤y2≤0.6, or 0.5≤x2≤0.99 and 0.01≤y2≤0.5, or 0.6≤x2≤0.99 and 0.01≤y2≤0.4, or 0.7≤x2≤0.99 and 0.01≤y2≤0.3, or 0.8≤x2≤0.99 and 0.01≤y2≤0.2, or 0.9≤x2≤0.99 and 0.01≤y2≤0.1.

For example, the positive electrode active material may include a lithium nickel cobalt composite oxide represented by Chemical Formula 3:

Chemical Formula 3 Liₐ₃Niₓ₃Co_{y3}M⁴_{z3}M⁵_{1-x3-y3-z3}O₂.

In Chemical Formula 3, 0.9≤a3≤1.8, 0.3≤x3≤0.98, 0.01≤y3≤0.69, 0.01≤z3≤0.69, M⁴ is selected from Al, Mn, and a combination thereof, and M⁵ is selected from B, Ce, Cr, F, Mg, Mo, Nb, P, S, Si, Sr, Ti, V, W, Zr, and a combination thereof.

In Chemical Formula 3 0.4≤x3≤0.98, 0.01≤y3≤0.59, and 0.01≤z3≤0.59, or 0.5≤x3≤0.98, 0.01≤y3≤0.49, and 0.01≤z3≤0.49, or 0.6≤x3≤0.98, 0.01≤y3≤0.39, and 0.01≤z3≤0.39, or 0.7≤x3≤0.98, 0.01≤y3≤0.29, and 0.01≤z3≤0.29, or 0.8≤x3≤0.98, 0.01≤y3≤0.19, and 0.01≤z3≤0.19, or 0.9≤x3≤0.98, 0.01≤y3≤0.09, and 0.01≤z3≤0.09.

### Positive Electrode

The positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100% by weight of the positive electrode active material layer, and amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and a combination thereof, but are not limited thereto.

The conductive material may be used to impart conductivity (e.g., electrical conductivity) to the electrode and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, etc., in a form of a metal powder and/or a metal fiber; a conductive polymer (e.g., an electrically conductive polymer) such as a polyphenylene derivative; or a mixture thereof.

The current collector may include Al, but is not limited thereto.

### Both-surface Coating

In the electrode of some embodiments, the uncoated portion; active material layer; and the endothermic ceramic layer may be on one surface alone of the current collector. As used herein, this is referred to as "single-surface coating".

In some embodiments, the uncoated portion; the active material layer; and the endothermic ceramic layer may be respectively on one surface and the other surface of the current collector. In the present specification, this is called `both-surface coating.'

Compared to the single-surface coating, the both-surface coating may be beneficial or advantageous in preventing or reducing occurrence of internally-generated short circuits as well as short circuits caused by external forces.

However, in the both-surface coating, the uncoated portions on two different sides (e.g., two opposing sides) may have the same or different length in a horizontal direction, the active material layers on two different sides also may have the same or different length in the horizontal direction, and the endothermic ceramic layer on two different sides also may have the same or different length in the horizontal direction.

### Electrode Assembly

In some embodiments, as a wound-type electrode assembly including a stack of a negative electrode, a separator, and a positive electrode, at least one electrode of the negative electrode and the positive electrode is the above electrode.

The endothermic ceramic layer may be on the outermost layer of the wound-type electrode assembly. Herein, the endothermic ceramic layer exhibits insulation properties (e.g., electrically insulating properties) preventing or reducing flow of a current directly to a current collector from an outermost layer of the wound-type electrode assembly. In some embodiments, the endothermic ceramic layer, which includes the endothermic ceramic, directly exhibits endothermic properties as well as the insulation properties (e.g., electrically insulating properties).

For example, the positive electrode is the aforementioned electrode, and the positive electrode tab may be on the uncoated portion alone of the positive electrode. A detailed description of this is as described above.

### Rechargeable Lithium Battery

Some embodiments provide a rechargeable lithium battery including the electrode assembly and electrolyte described above.

### Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as irregular-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Negative Electrode

The negative electrode for a rechargeable lithium battery includes a current collector and a negative electrode active material layer on the current collector. The negative electrode active material layer includes a negative electrode active material and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting viscosity. The cellulose-based compound includes one or more of carboxylmethyl cellulose, hydroxypropylmethyl cellulose, methyl cellulose, and/or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

### Electrolyte

The electrolyte for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be used alone or as a mixture of two or more.

Additionally, if using a carbonate-based solvent, cyclic carbonate and chain carbonate can be mixed together and used, and cyclic carbonate and chain carbonate can be mixed together at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Separator

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from a polymer, or a copolymer or mixture of two or more of polyolefin such as polyethylene and/or polypropylene, a polyester such as polyethyleneterephthalate, and/or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, TEFLON (tetrafluoroethylene), and/or polytetrafluoroethylene.

The organic material may include a polyvinylidene fluoride-based polymer and/or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed together in one coating layer, or a coating layer including an organic material and a coating layer including an inorganic material may be stacked.

### Rechargeable Lithium Battery

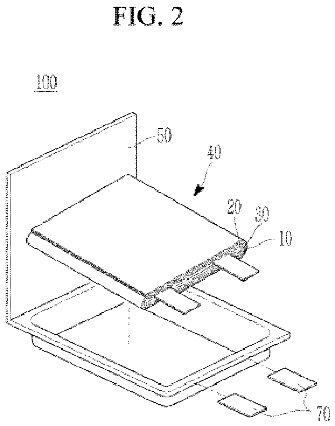

The rechargeable lithium battery may be classified into cylindrical, prismatic, pouch, or coin-type batteries, and/or the like depending on the shape thereof. FIG. 2 is a schematic view showing a rechargeable lithium battery according to some embodiments, which may be in the form of a pouch-type battery. Referring to FIG. 2, the rechargeable lithium battery 100 includes an electrode assembly 40 having a separator 30 between the positive electrode 10 and the negative electrode 20, and a case 50 in which the electrode assembly 40 is housed. The positive electrode 10, negative electrode 20, and separator 30 may be impregnated with an electrolyte. As shown in FIG. 2, the rechargeable lithium battery 100 includes an electrode tab 70, for example, a positive electrode tab and a negative electrode tab, which serve as an electrical path for guiding the current formed in the electrode assembly 40 to the outside.

The rechargeable lithium battery according to some embodiments may be applied to automobiles, mobile phones, and/or various suitable types (or kinds) of electrical devices, but the present disclosure is not limited thereto.

Hereinafter, examples and comparative examples of the present disclosure will be described. However, the following examples are only examples of the present disclosure, and the present disclosure is not limited to the following examples.

### Example 1

### (1) Manufacture of Positive Electrode

95 wt% of LiCoO₂ as a positive electrode active material, 3 wt% of polyvinylidene fluoride as a binder, and 2 wt% of ketjen black as a conductive material were mixed together in an N-methylpyrrolidone solvent to prepare a positive electrode active material slurry.

90 wt% of pseudoboehmite as an endothermic ceramic and 10 wt% of polyvinylidene fluoride as a binder were mixed together in a water solvent to prepare an endothermic ceramic slurry.

The positive electrode active material slurry and the endothermic ceramic slurry were used sequentially to form an uncoated portion; a positive electrode active material layer; and an endothermic ceramic layer on both of surfaces of an aluminum current collector having a width of 1500 mm * a length of 70 mm * a thickness of 12 µm from one end to the other end.

On the first surface (front surface) of the aluminum current collector, from one end to the other end, the uncoated portion; the positive electrode active material layer; and the endothermic ceramic layer having each length in a horizontal direction of 25 mm; 1345 mm; and 130 mm were sequentially formed. Herein, the active material layer and the endothermic ceramic layer each had a thickness of 50 µm.

On the second surface (rear surface) of the aluminum current collector, from one end to the other end, the uncoated portion; the positive electrode active material layer; and the endothermic ceramic layer were sequentially formed to have each length of 25 mm; 1395 mm; and 80 mm in the horizontal direction. Herein, the positive electrode active material layer and the endothermic ceramic layer each had a thickness of 50 µm.

Subsequently, onto the uncoated portion alone, a positive electrode tab was attached (one positive electrode tab in total).

### (2) Manufacture of Negative Electrode

97.3 wt% of artificial graphite as a negative electrode active material, 0.5 wt% of Denka black, 0.9 wt% of carboxymethyl cellulose, and 1.3 wt% of a styrene butadiene rubber were mixed together in an aqueous solvent to prepare a negative electrode active material slurry.

The negative electrode active material slurry was coated on both surfaces of a copper current collector having a width of 1500 mm * a length of 70 mm * a thickness of 12 µm, from one end to the other end to sequentially form an uncoated portion; a negative electrode active material layer; and an uncoated portion. On both surfaces of the copper current collector, the negative electrode active material layer each had a thickness of 50 µm.

The uncoated portion; the negative electrode active material layer; and the uncoated portion formed on the copper current collector had the same length as that of the uncoated portion; the negative electrode active material layer; and the endothermic ceramic layer formed on both surfaces (e.g., two opposing surfaces) of the aluminum current collector.

Subsequently, each negative electrode tab was attached onto both of the uncoated portions (two negative electrode tabs in total).

### (3) Manufacture of Electrode Assembly and Rechargeable Lithium Battery Cell including the same

A polyethylene separator was interposed between the positive electrode and the negative electrode to manufacture a stack, and the stack was wound with the endothermic ceramic layer located at the outermost layer.

The wound stack was pressed in a vertical direction to manufacture a wound-type electrode assembly.

After inserting the wound-type electrode assembly in a pouch, an electrolyte solution, which was prepared by adding 1.0 M LiPF₆ lithium salt to a mixed solvent of ethylene carbonate and diethyl carbonate in a volume ratio of 50:50, was injected thereinto to manufacture a rechargeable lithium battery cell.

### Example 2

A positive electrode, a negative electrode, an electrode assembly, and a rechargeable lithium battery cell were manufactured in substantially the same manner as in Example 1 except that the endothermic ceramic layer was formed by mixing together pseudoboehmite and regular boehmite in a weight ratio of 70:30.

### Example 3

A positive electrode, a negative electrode, an electrode assembly, and a rechargeable lithium battery cell were manufactured in substantially the same manner as in Example 1 except that the endothermic ceramic layer was formed by mixing together pseudoboehmite and regular boehmite in a weight ratio of 50:50.

### Comparative Example 1

A positive electrode, a negative electrode, an electrode assembly, and a rechargeable lithium battery cell were manufactured in substantially the same manner as in Example 1 except that the endothermic ceramic layer itself was not formed.

### Comparative Example 2

A positive electrode, a negative electrode, an electrode assembly, and a rechargeable lithium battery cell were manufactured in substantially the same manner as in Example 1 except that the endothermic ceramic layer was formed by using regular boehmite alone.

### Evaluation Example 1: Evaluation of Endothermic Ceramic Layer

Each of the endothermic ceramic layers of the examples and the comparative examples was measured with respect to a heat flow, while heating from 100 °C to 230 °C, by using a differential scanning calorimeter (DSC), which was used to calculate a heat flow change (ΔH (J/g)), and the results are shown in Table 1:

**Table 1**

| | Configuration of endothermic ceramic layer | ΔH (J/g) @100-230 °C |
|---|---|---|
| Comparative Example 1 | No endothermic ceramic layer | -361 |
| Comparative Example 2 | General boehmite alone | -341 |
| Example 1 | pseudoboehmite alone | -320 |
| Example 2 | pseudoboehmite: general boehmite = 70:30 (w:w) | -326 |
| Example 3 | pseudoboehmite: general boehmite = 50:50 (w:w) | -330 |

### Evaluation Example 2: Evaluation of Rechargeable Lithium Battery Cell

Each of the rechargeable lithium battery cells of the examples and the comparative examples was evaluated with respect to a thermal exposure evaluation pass rate and a low speed penetration evaluation rate under substantially the same conditions, and the results are shown in Table 2.
(1) Heat exposure evaluation pass rate: Ten rechargeable lithium battery cell samples having capacity of 4 Ah were charged at a charge current of 0.5 C to 4.47 V and charged to 0.05 C at a charge voltage. After allowing them to stand for 24 hours, thermal exposure of the cells was evaluated. The cells were heated to 130 °C or 140 °C from room temperature at 5 °C/min and after reaching a target temperature, maintained for one hour. Only the samples which completed without ignition were evaluated as passing.
(2) Low-speed penetration evaluation pass rate: Ten rechargeable lithium battery cell samples having capacity of 4 Ah were charged at a charge current of 0.5 C to 4.47 V and charged to 0.05 C at a constant voltage. After allowing them for 24 hours, a penetration evaluation was performed. The cells were evaluated with respect to safety by nailing a ψ3 mm nail at 10 m/sec, and only the samples which completed with a surface temperature of 200 °C or less without ignition were evaluated as passing.

**Table 2**

| | Configuration of endothermic ceramic layer | Heat exposure evaluation pass rate | | Low-speed penetration evaluation pass rate |
|---|---|---|---|---|
| | | 130 °C, 1 hour | 140 °C, 1 hour | |
| Comparative Example 1 | No endothermic ceramic layer | 100% | 0% | 0% |
| Comparative Example 2 | General boehmite alone | 100% | 80% | 30% |
| Example 1 | pseudoboehmite alone | 100% | 100% | 80% |
| Example 2 | pseudoboehmite: general boehmite =70:30 (w:w) | 100% | 100% | 70% |
| Example 3 | pseudoboehmite: general boehmite =50:50 (w:w) | 100% | 100% | 50% |

Referring to Tables 1 and 2, the rechargeable lithium battery cells of Examples 1 to 3, compared with the rechargeable lithium battery cells of Comparative Examples 1 and 2, exhibited a decreased heat flow change (ΔH (J/g)) and an increased passing rate in the thermal exposure evaluation and the low-speed penetration evaluation.

Particularly, even in Examples 1 to 3, as an amount of pseudoboehmite in the endothermic ceramic layer was increased, safety and reliability were improved.

While the subject matter of this disclosure has been described in connection with what is presently considered to be practical exemplary embodiments, it is to be understood that the present disclosure is not limited to the disclosed embodiments, but, on the contrary, is intended to cover various modifications and equivalent arrangements included within the spirit and scope of the appended claims, and equivalents thereof.

### Description of Symbols

100: rechargeable lithium battery
10: positive electrode
20: negative electrode
30: separator
40: electrode assembly
50: case
70: electrode tab

## Claims

1. An electrode (10;20) for a rechargeable lithium battery (100), comprising:
an uncoated portion; an active material layer; and an endothermic ceramic layer which are provided sequentially from one end to the other end on the same single surface of the current collector.

2. The electrode (10;20) as claimed in claim 1, wherein:
the endothermic ceramic layer comprises pseudoboehmite.

3. The electrode (10;20) as claimed in claim 1 or 2, wherein:
based on a total weight of 100 wt% of the endothermic ceramic layer, a content of pseudoboehmite is about 50 wt% to about 100 wt%.

4. The electrode (10) as claimed in any of the claims 1 to 3, wherein:
the electrode (10) is a positive electrode (10), and
a positive electrode tab is attached on the uncoated portion alone.

5. The electrode (10) as claimed in any of the claims 1 to 4, wherein:
the electrode (10) is a positive electrode (10), and
the active material layer comprises a lithium nickel composite oxide represented by Chemical Formula 1:
Chemical Formula 1 Liₐ₁Niₓ₁M¹_{y1}M²_{1-x1-y1}O₂
wherein, in Chemical Formula 1,
0.9≤a1≤1.8, 0.3≤x1≤1, 0≤y1≤0.7, and
M¹ and M² are each independently selected from Al, B, Ce, Co, Cr, F, Mg, Mn, Mo, Nb, P, S, Si, Sr, Ti, V, W, Zr, and a combination thereof.

6. The electrode (10;20) as claimed in any of the claims 1 to 3, wherein:
the uncoated portion; active material layer; and endothermic ceramic layer are on two opposing surfaces of the current collector, respectively.

7. An electrode assembly (40) for a rechargeable lithium battery (100), comprising a wound-type electrode assembly (40) a stack of a negative electrode (20), a separator, and a positive electrode,
wherein at least one electrode of the negative electrode (20) and the positive electrode (10) is the electrode as claimed in any of the claims 1 to 6.

8. The electrode assembly (40) as claimed in claim 7, wherein:
the endothermic ceramic layer is on the outermost layer of the wound-type electrode assembly (40).

9. The electrode assembly (40) as claimed in claim 7 or 8, wherein:
the positive electrode (10) is the electrode as claimed in claim 1, and
the positive electrode tab is on the uncoated portion alone of the positive electrode.

10. A rechargeable lithium battery (100), comprising the electrode assembly (40) as claimed in any of the claims 7 to 9 and an electrolyte.
